# EUROPEAN PATENT SPECIFICATION

(11) **EP 3 830 429 B1**
(45) Date of publication and mention of the grant of the patent: **30.08.2023**
(21) Application number: 19844252.7
(22) Date of filing: 01.07.2019
(51) Int. Cl.: F16B 12/12, A47B 47/04, B23C 1/08, F16B 12/22, F16B 21/09, F16B 12/26, B27M 3/18

(54) **A CONNECTION ARRANGMENT AND A METHOD OF PROVIDING A FURNITURE PART WITH RECESSES**
VERBINDUNGSANORDNUNG UND VERFAHREN ZUR BEREITSTELLUNG EINES MÖBELTEILS MIT AUSNEHMUNGEN
AGENCEMENT D'ASSEMBLAGE ET PROCÉDÉ POUR ÉQUIPER UNE PARTIE DE MEUBLE DE RENFONCEMENTS

(30) Priority: 02.08.2018 SE 1850950
(43) Date of publication of application: 09.06.2021
(73) Proprietor: IKEA Supply AG, 4133 Pratteln (CH)
(72) Inventor: CARLSSON, Mikael, 352 51 Växjö (SE)
(74) Representative: Ström & Gulliksson AB
(86) International application number: PCT/SE2019/050646
(87) International publication number: WO 2020/027712

(56) References cited:
- WO-A1-2016/076783
- WO-A1-2018/052394
- DE-A1-102007 058 662
- US-A1- 2013 239 509
- US-A1- 2014 205 373
- US-A1- 2014 205 373
- US-A1- 2018 031 019
- US-A1- 2018 303 237

## Description

### Field of invention

The invention relates to a connection arrangement for connecting a first furniture part to a second furniture part. The invention also relates to method of providing a furniture part with a recesses configured to interact with dowels.

### Technical Background

Within the field of furniture assembly, it is often desired to connect furniture parts to each other. Furniture parts may be connected by fastening means, such as screws or nails. A problem with such fastening means is the need for tools, and sometimes specific tools, in order to apply them. They are often also sensitive to incorrect positioning; for instance, incorrectly hammering a nail may lead to bending of the nail and/or damages to the furniture part, or even personal injury. The tools may also be difficult to use, especially for the disabled or elderly. Furthermore, the fastening means themselves may be prone to be lost, or dangerous for small children. Furniture parts may also be connected with different kinds of locks. However, these may also require many parts, and may not present strong connections when subjected to wear over time.

For at least the reasons described above, a need exists for better ways to connect furniture parts.

US 2014205373 A1 discloses a connection arrangement for connecting a first furniture part to a second furniture part.

### Summary of invention

It is an object of the invention to at least mitigate some of the problems mentioned in the background.

This object has been achieved by a connection arrangement for connecting a first furniture part to a second furniture part,
wherein the first furniture part comprises:
   a primary dowel and a secondary dowel, each dowel extending from the first furniture part along a longitudinal direction towards a free end of the dowel, and each dowel having at least one neck portion, and
wherein the second furniture part comprises:
   a primary recess and a secondary recess, wherein the primary recess is associated with the primary dowel and the secondary recess is associated with the secondary dowel, wherein each recess comprises an insertion portion and a locking portion arranged one after the other along a transverse direction, wherein the insertion portions are configured to receive the respective associated dowel by a motion of the first furniture part along the longitudinal direction relative to the second furniture part, and wherein the dowels are configured to be transferred from the insertion portion to the locking portion of respective associated recess by a motion of the first furniture part along the transverse direction relative to the second furniture part, wherein the locking portions are configured to interact with the neck portion of the respective associated dowel to counteract removal of the dowel from the locking portion in a direction opposite the longitudinal direction,
wherein at least the primary recess further comprises an end portion formed after the locking portion as seen along the transverse direction, the end portion being configured to interact with the primary dowel and to prevent the first furniture part from moving any further along the transverse direction by providing an end position in the motion of the first furniture part along the transverse direction relative to the second furniture part, and
wherein, the dowels and the recesses are positioned relative to each other such that, as the first furniture part has been brought to the end position, the secondary dowel becomes positioned at a position in the associated locking portion at which position the secondary dowel would have been movable along the transverse direction relative to the recess had the first furniture part not been prevented from moving any further along the transverse direction.

It may be noted that the wording primary and secondary are labels intended to make it possible to make a distinction between a dowel from another dowel or other dowels and a recess from another recess or other recesses.

It has been found that in a connection arrangement comprising a first furniture part with a plurality of dowels of the above disclosed kind each interacting with one out of a plurality of recesses of the above disclosed kind, the force necessary to move the furniture parts relative to each other along the transverse direction sometimes becomes undesirably high, especially at the very end of the movement. It has also been found that in a connection arrangement a first furniture part with a plurality of dowels of the above disclosed kind each interacting with one out of a plurality of recesses of the above disclosed kind, it is sometimes difficult for the person assembling the furniture to feel if the furniture parts have been moved to their intended end position of if they are stuck before they have reached their intended end position.

These issues have been addressed by a connection arrangement in with the dowels and recesses of the above discussed kind,
wherein at least the primary recess further comprises an end portion formed after the locking portion as seen along the transverse direction, the end portion being configured to interact with the primary dowel and to provide an end position in the motion of the first furniture part along the transverse direction relative to the second furniture part, and
wherein, the dowels and the recesses are positioned relative to each other such that, as the first furniture part has been brought to the end position, the secondary dowel becomes positioned at a position in the associated locking portion at which position the secondary dowel would have been movable along the transverse direction relative to the recess had the first furniture part not been prevented from moving any further along the transverse direction.

With this design, the end position in the motion is distinctly provided by the interaction between the primary dowel and the primary recess, whereas the other dowel or dowels are still freely movable relative to its/their associated recess or recesses. With such a design it becomes e.g. possible to provide a distinct end position in the primary recess and to keep the provision of a distinctive end position even though the relative positions are slightly erroneously positioned during manufacture or shifts slightly e.g. when the furniture parts dry and shrink over time or change with the moisture content over the seasons.

With such a design it is also possible to reduce the impact of any shrinking over time or any change with the moisture content over the seasons, by positioning the primary recess in the furniture close to the side at which it is desired to keep the first and second furniture parts in their intended relative position. It is e.g. typically desirable to keep the first and second furniture parts in their intended relative position at the front side of the furniture. In such a case the primary dowel and primary recess are positioned close to the front side of the furniture.

The above design also makes it possible to design all recesses identically and all dowels identically with the secondary recess shifted in position relative to the nominal position of the associated secondary dowel, which facilitates manufacture and assembly at the manufacturing site.

It may be noted that the expression furniture part may relate to different kinds of furniture. It may e.g. relate to separate free standing furniture, such as shelves, book shelves, TV-benches, side boards, tables, cupboards, etc. It may also relate to built-in cabinets or shelves, such as wall-hanged kitchen cabinets, wall-hanged kitchen shelves, etc. It may also relate to semi-built-in cabinets or shelves, such as wall hanged TV-benches, etc. Irrespective of it is built-in or free standing it may not only relate to furniture designed for storage, such as cabinets and shelves, but may also relate to furniture parts for furniture for other kinds of use. It may e.g. relate to furniture for sitting, such as sofas, benches, chairs, etc.

The secondary recess may further comprise an end portion,
wherein the primary dowel may be positioned at a dowel distance from the secondary dowel along the transverse direction,
wherein the primary recess may be positioned at a recess distance from the secondary recess along the transverse direction, and
wherein the dowel distance may be greater than the recess distance such that as the first furniture part has been brought to the end position, there is a play, as seen along the transverse direction between the secondary dowel and the end portion of the secondary recess.

This design further facilitates making it possible to design all recesses identically and all dowels identically with the secondary recess shifted in position relative to the nominal position of the associated secondary dowel, which facilitates manufacture and assembly at the manufacturing site. It also provides a safety feature in that in case the primary dowel is broken or missing, the furniture parts may still be stopped close to their intended position by the end portion of the secondary recess being configured to in such a case interact with the secondary dowel and to provide a secondary end position in the motion of the first furniture part along the transverse direction relative to the second furniture part.

Each locking portion may have a length along the transverse direction along which length the locking portions are configured to interact with the neck portion of the respective associated dowel to counteract removal of the dowel from the locking portion in a direction opposite the longitudinal direction and along which length the respective dowel may be slidable in the locking portion along the transverse direction.

By providing such an elongated locking portion it is possible to provide a strong connection between the furniture parts since all dowels and recesses interact at the locking portions of the recesses and still it is possible to provide the play necessary for securing that only the primary dowel reaches an end portion of the primary recess. By providing an elongated locking portion at all recesses also further facilitates making it possible to design all recesses identically and all dowels identically.

The length of respective locking portion may be at least equal to, and is preferably greater than, a difference by which the dowel distance is greater than the recess distance.

This provides sufficient length allowing all the recesses to be designed identically with the secondary recess to be shifted the above disclosed difference in distance such that the secondary dowel becomes positioned in the locking portion without reaching any end portion of the secondary recess.

The primary and secondary dowels may be arranged on a common dowel centre line extending along the transverse direction and the primary and secondary recesses are arranged on a common recess centre line extending along the transverse direction. This facilitates manufacture of the first furniture part. It also facilitates assembly of the first and second furniture parts since the friction force from the interaction between the dowels and recesses will act along the common centre lines thereby avoiding the formation of a torque which the person assembling the furniture otherwise would need to counter-act. It may be noted that it is conceivable to have more than one set of recesses on the second furniture part and/or more than one set of dowels on the first furniture part, In such a case it is preferred that there is a unique common dowel centre line such that the dowels of each set of dowels are positioned along their own common centre line and it is preferred that there is a unique common recess centre line such that the recesses of each set of recesses are positioned along their own common recess centre line.

The primary recess may, at a transition between the locking portion and the end portion, be provided with a localised geometrical alteration locally increasing force needed to move the primary dowel relative to the primary recess from the locking portion to the end portion compared to force needed to move the primary dowel relative to the primary recess along the locking portion. This alteration may be said to provide a snap-lock functionality.

The localised geometrical alteration may e.g. be a waist having a slightly smaller width, in a direction transverse to the longitudinal direction and transverse to the transverse direction, of the primary recess. This slightly smaller width may e.g. be provided by having both sidewalls being formed with a localised geometrical alteration. However, it may be noted that a slightly smaller width may also be provided by allowing one side wall extend without any localised geometrical alteration and providing all of the narrowed width by providing a localised geometrical alteration on only one of the side walls. This latter may e.g. be useful if one of the side walls of the recess extend in proximity to an edge of the furniture, and especially if the side wall of the recess is in proximity to an edge of the furniture being intended to be provided with an edge strip. It may e.g. be desirable to allow the side wall of the recess being in proximity to the furniture edge to extend in parallel to the furniture edge. The localised geometrical alteration may e.g. be an alteration or distinct change of the sidewall geometry such that the second furniture part e.g. is forced slightly harder towards the first furniture part as the dowel passes this localised geometrical alteration. The localised geometrical alteration may e.g. be a small hump or wart on a part of a side wall of the primary recess. With such a design, the person assembling the furniture will get a tactile and possibly also an audible feedback concerning that the furniture parts have reached the intended end position.

It may be noted that the recesses may be identical and that if the secondary recess also is provided with a localised geometrical alteration, the distances are chosen such that the secondary dowel does not reach the localized geometrical alteration of the secondary recess.

The first furniture part may, at respective connection arrangement, be provided with a single primary dowel and two or more secondary dowels, and the second furniture part may, at respective connection arrangement, be provided with a single primary recess and two or more secondary recesses.

The provision of one primary dowel/recess and two or more secondary dowels/recesses provides a strong connection and still provides a furniture which is easy to assemble. It may however be noted that there may be more than one connection arrangement in one or both furniture parts. It is e.g. conceivable to use a set-up with two connection arrangement on the second furniture part such that the second furniture part may be attached to the first furniture part and to another furniture part having dowels similarly to the dowels of the first furniture part. In such a case it is preferred that the connection arrangement between the first and second furniture parts has a set-up with a primary dowel/recess and one or more secondary dowels/recesses and that the connection arrangement between the second and third furniture parts also has a set-up with a primary dowel/recess and one or more secondary dowels/recesses.

Other combinations are also conceivable. It is e.g. conceivable to provide a second furniture part intended to form a seat of a chair with two parallel sets of recesses intended to interact with two parallel sets of dowels arranged on each side of the chair frame forming the first furniture part. Thus, each of the first and second furniture parts may be provided with two individual connection arrangements, each connection arrangement having a set-up with a primary dowel/recess and one or more secondary dowels/recesses.

The second furniture part may be a plate shaped member with the primary and secondary recesses formed in a major surface of the plate shaped member. It is convenient to provide the recesses on a plate shaped member since the plate shaped member will still expose a flat major surface when it comes to packing and transporting the second furniture part. The dowels are preferably provided on a side edge of a plate shaped member.

The primary and secondary recesses may be identical. This facilitates manufacture thereof.

The above mentioned object has also been achieved by a method of providing a furniture part with a primary recess and a secondary recess configured to interact with a primary dowel and a secondary dowel of another furniture part, the method comprising
determining an intended distance between the primary dowel and the secondary dowel,
setting a distance between a first milling tool and a second milling tool, the distance being smaller than the intended distance between the primary dowel and the secondary dowel,
simultaneously operating the first and the second milling tool in a common milling pattern while maintaining the distance thereby forming a primary recess and a secondary recess at a mutual distance being smaller than then intended distance between the primary dowel and the secondary dowel.

By forming the recesses in accordance with this method it is possible to use efficient manufacturing methods and still provide the desired effect of providing one recess giving the end position and the other recess providing locking effect without making the end position imprecise.

The first and second milling tools may be fixedly attached to a common machine part, wherein the act of simultaneously operating the first and second milling tool comprises moving the common machine part to provide at least a part of the common milling pattern. By using a common machine part and moving the common machine part as part of the milling pattern it is in an easy and efficient manner secured that the relative positions of those parts of the milling pattern and the relative positions of the thus formed parts of the recesses are accurate.

Each recess may comprise an insertion portion and a locking portion arranged one after the other along a transverse direction, wherein the act of simultaneously operating the first and the second milling tool in a common milling pattern may comprise:
moving the milling tools towards and into the second furniture part in a longitudinal direction thereby drilling and forming the insertion portions or inserting the milling tools into pre-drilled holes and forming the insertion portions,
moving the milling tools in the transverse direction with an envelope surface of the respective milling tool forming one or both side walls of the respective locking portion,
returning the milling tools to the respective insertion portion by moving them in a direction opposite the transverse direction, with the envelope surface of the respective milling tool forming the other of the side walls of the respective locking portion in case only one of the side walls was formed in the transverse motion of the milling tools,
removing the milling tools from the recesses by moving the milling tools in a direction opposite the longitudinal direction.

This is an efficient way of forming the recesses in the furniture part. It is preferred that the milling tools are rotated about axes parallel to the longitudinal direction and have a profiled circumferential envelope surface corresponding to the desired shape of the side walls of the recesses. It is also further preferred that the profiled surface has diameters slightly smaller than the desired with of the recess such that one of the side walls is formed as the milling tools are moved along the transverse direction and the other side wall is formed as the milling tools are returned to the respective insertion portion. With this latter, it is possible to provide a localised geometrical alteration in the form of a slightly narrowed portion in the transition between the locking portion and the end portion.

It is preferred that at least the act of moving the milling tools in the transverse direction and the act of returning the milling tools to the insertion portion by moving them in a direction opposite the transverse direction, are provided by moving the common machine part first in the transverse direction and thereafter in the direction opposite the transverse direction. It is especially useful that the end portions are formed using a secure relative position such that the recesses are well-defined in their relative positions in this regard.

The invention may also in short be said to relate to a connection arrangement for connecting a first furniture part to a second furniture part,
wherein the first furniture part comprises a primary dowel and a secondary dowel comprises a primary recess and a secondary recess further comprises an end portion configured to interact with the primary dowel and to provide an end position in the motion of the first furniture part, and wherein, the dowels and the recesses are positioned relative to each other such that, as the first furniture part has been brought to the end position, the secondary dowel becomes positioned at a position at which position the secondary dowel would have been movable along the transverse direction relative to the recess had the first furniture part not been prevented from moving any further along the transverse direction.

### Brief description of the drawings

The invention will by way of example be described in more detail with reference to the appended schematic drawings, which shows a presently preferred embodiment of the invention.
Figure 1 discloses a furniture in which a top panel is attached to two side walls using a connection arrangement with dowels and recesses.
Figure 2A is discloses the attachment of the left-hand side wall and top panel of figure 1.
Figure 2B discloses in planar view and perspective view a state where the dowels of the side wall are inserted into the recesses of the top panel.
Figure 2C discloses in planar view and perspective view a final state where the dowels of the side wall are locked in position in the recesses of the top panel.
Figure 2D discloses in planar view a recess having a localized geometrical alteration in the form of a locally narrowed with.
Figure 3 discloses a milling machine for use a milling operation by which the top panel may be provided with its recesses.
Figure 4 is a schematic flow chart disclosing a method for manufacturing recesses in a furniture part.

### Detailed description of preferred embodiments

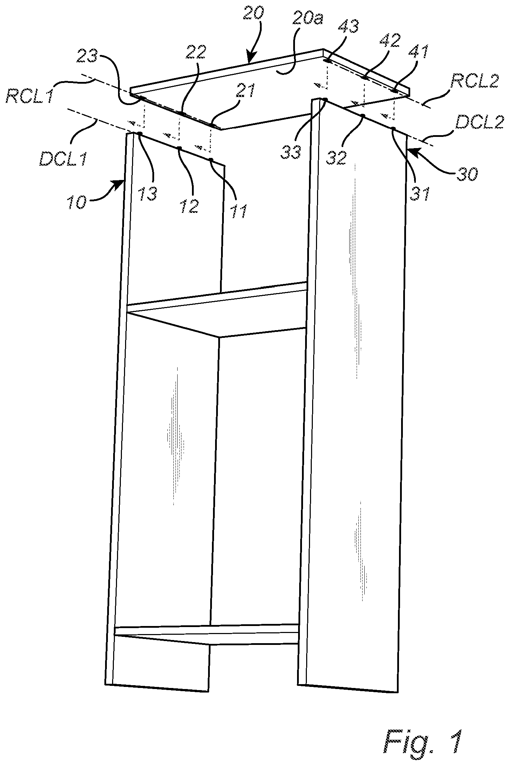

With reference to figure 1, there is disclosed a furniture comprising amongst others a first furniture part 10 and a second furniture part 20 connected to each other using an inventive connection arrangement. The furniture also comprises a third furniture part 30 also connected to the second furniture part 20 using the inventive connection arrangement.

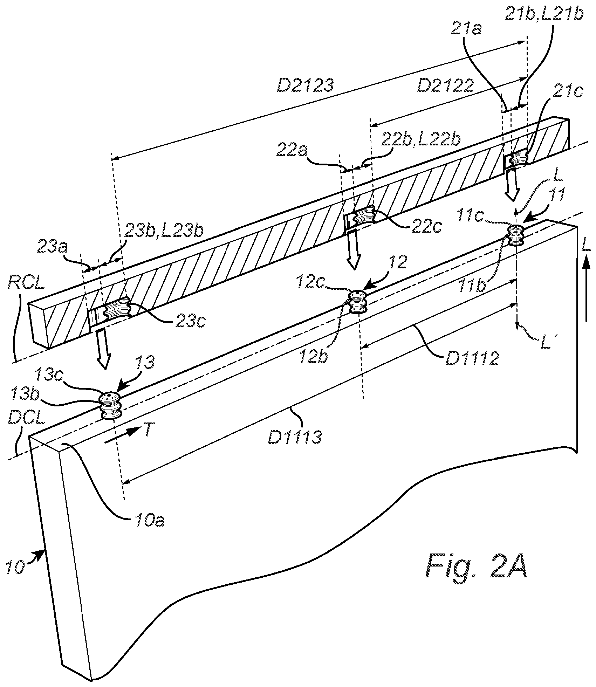

As is apparent from figure 1 and shown in more detail in figure 2A, the first furniture part 10 comprises a plurality of dowels 11, 12, 13. In this preferred embodiment each connection arrangement comprises three dowels 11, 12, 13.

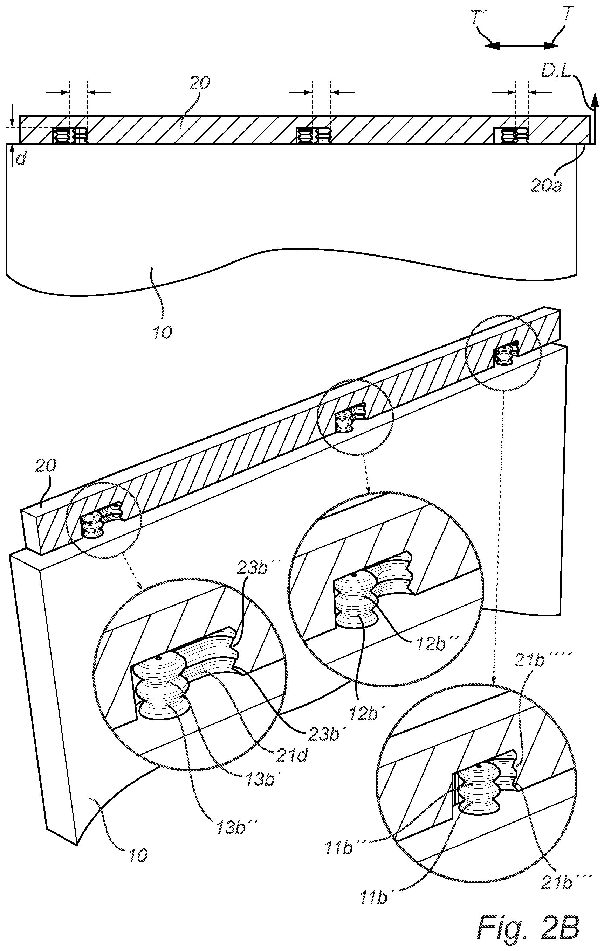

The dowels 11, 12, 13 may, e.g. based on their functionality, be labelled to include one primary dowel 11 and one or more in this case two secondary dowels 12, 13. Each dowel 11, 12, 13 extends from the first furniture part 10 along a longitudinal direction L towards a free end 11c, 12c, 13c of the dowel 11, 12, 13. Each dowel 11, 12, 13 has at least one neck portion 11b, 12b, 13b. As shown in the figures and as indicated e.g. in figure 2B, each dowel 11, 12, 13 is provided with two neck sections 11 b', 11b", 12b', 12b", 13b', 13b". The dowels 11, 12, 13 are in this embodiment identical but it may be noted that they do not need to be identical.

As is also apparent from figure 1 and disclosed in more detail in figure 2A, the second furniture part 20 comprises a plurality of recesses 21, 22, 23. In this preferred embodiment each connection arrangement comprises three recesses 21, 22, 23.

The recesses 21, 22, 23 may, e.g. based on their functionality, be labelled to include one primary recess 21 and one or more in this case two secondary recesses 22, 23. The primary recess 21 is associated with the primary dowel 11 and the respective secondary recess 22, 23 is associated with a respective secondary dowel 12, 13. It may be noted that the number of dowels 11, 12, 13 and the number of recesses 21, 22, 23 are preferably the same. However, it is conceivable that the furniture parts 10, 20 are provided with additional dowels or recesses. Such additional dowels or recesses may e.g. be provided to allow alternative uses or to facilitate standardised manufacture. Typically, such additional dowels or recesses do not form active part of the connection arrangement disclosed herein.

Each recess 21, 22, 23 comprises an insertion portion 21a, 22a, 23a and a locking portion 21b, 22b, 23b arranged one after the other along a transverse direction T. The insertion portions 21a, 22a, 23a are configured to receive the respective associated dowel 11, 12, 13 by a motion of the first furniture part 10 along the longitudinal direction L relative to the second furniture part 20. In the embodiment disclosed in figure 1 and figures 2A-C, this relative motion is provided by moving the second furniture part 20 in a direction L' opposite the longitudinal direction L such that the insertion portions 21a, 22a, 23a are moved onto the dowels 11, 12, 13. Which part actually being moved will typically depend upon the choice of the person assembling the furniture.

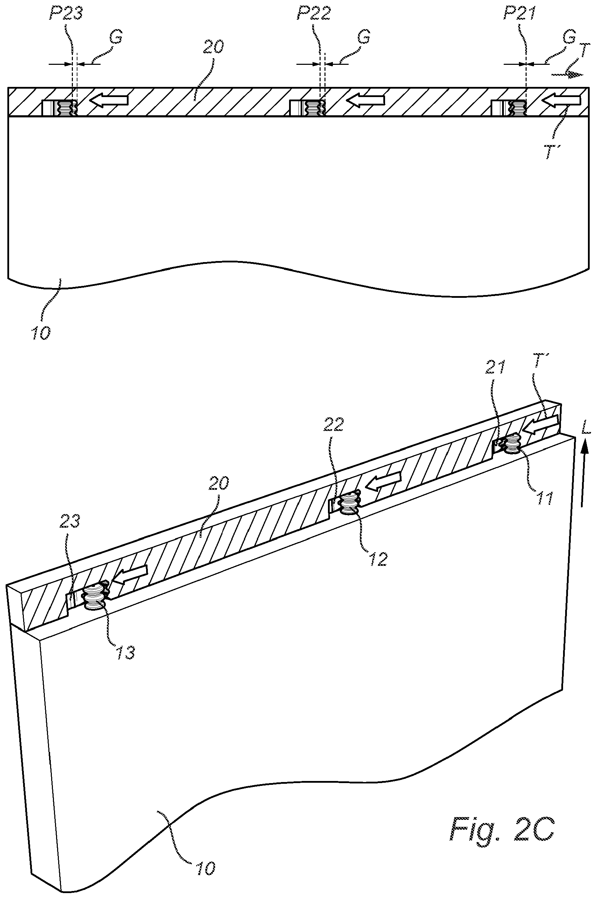

As indicated in figure 2C, the dowels 11, 12, 13 are configured to be transferred from the insertion portion 21a, 22a, 23a to the locking portion 21b, 22b, 23b of respective associated recess 21, 22, 23 by a motion of the first furniture part 10 along the transverse direction T relative to the second furniture part 20. In the embodiment disclosed in figure 1 and figures 2A-C, this relative motion is provided by moving the second furniture part 20 in a direction T' opposite the transverse direction T.

The locking portions 21b, 22b, 23b are configured to interact with the neck portion 11b, 12b, 13b of the respective associated dowel 11, 12, 13 to counteract removal of the dowel 11, 12, 13 from the locking portion 21b, 22b, 23b in a direction L' opposite the longitudinal direction L.

With reference e.g. to figure 2B, each recess 21, 22, 23 has a depth d as seen from the surface 20a intended to face the first furniture part 10 and along a depth direction D extending along the longitudinal direction L. Each recess 21, 22, 23 is, as seen along the depth direction D, provided with at least one, preferably two neck sections 21b', 21b", 22b', 22b", 23b', 23b" configured to interact with the respective neck portion 11b', 11b", 12b', 12b", 13b', 13b" of the associated dowel 11, 12, 13. The two neck sections 21b', 21b", 22b', 22b", 23b', 23b" are arranged one after the other as seen along the depth direction D. Alternatively, it may be said that the neck sections 21b', 21b", 22b', 22b", 23b', 23b" are provided at different depths of the respective recess 21, 22, 23. Each neck sections 21b', 21b", 22b', 22b", 23b', 23b" is formed by two oppositely arranged internal ridges as indicated by the reference numerals 21b‴ and 21b"" in the enlargement in figure 2B facing or pointing towards each other. The oppositely arranged internal ridges 21b‴, 21b"" extend each along both the side surfaces of the respective recess 21, 22, 23. The side surfaces extend along the depth direction D and along the transverse direction T. The recesses 21, 22, 23 are symmetrical about the common recess centre line RCL. As is apparent from the figures, the other recesses 22, 23 are also provided with such oppositely arranged internal ridges although no reference numerals are specifically provided.

At least the primary recess 21 comprises an end portion 21c formed after the locking portion 21b as seen along the transverse direction T. In the preferred embodiment, all recesses 21, 22, 23 comprises an end portion 21c, 22c, 23c. The end portion 21c of the primary recess 21 is configured to interact with the primary dowel 11 and to provide an end position P1 in the motion of the first furniture part 10 along the transverse direction T relative to the second furniture part 20.

As indicated in figures 2B and 2C, the dowels 11, 12, 13 and the recesses 21, 22, 23 are positioned relative to each other such that, as the first furniture part 10 has been brought to the end position P21 as shown in figure 2C, the secondary dowels 12, 13 become positioned at a position P22, P23 in the associated locking portion 22b, 23b at which position P22, P23 the secondary dowel 12, 13 would have been movable along the transverse direction T relative to the recess 22, 23 had the first furniture part 10 not been prevented from moving any further along the transverse direction T.

As indicated in figure 2A, the primary dowel 11 is positioned at a dowel distance D1112 from one of the secondary dowels 12 and a dowel distance D1113 from the other one of the secondary dowel 12, 13, as seen along the transverse direction T. The primary recess 21 is positioned at a recess distance D2122 from one of the secondary recesses 22 and a recess distance D2123 from the other one of the secondary recess 22, 23, as seen along the transverse direction T.

The relative positioning of the dowels 11, 12, 13 and the recesses 21, 22, 23 entails choosing the distances such that the dowel distances D1112, D1113 are greater than the recess distances D2122, D2123. Thereby there will, when the first furniture part 10 has been brought to the end position P21 as shown in figure 2C, be a play G, as seen along the transverse direction T between the respective secondary dowel 22, 23 and the end portion 22c, 23c of the associated secondary recess 22, 23.

As e.g. indicated in figure 2A, each locking portion 21b, 22b, 23b is elongated and has a length L21b, L22b, L23b along the transverse direction T. Along this length L21b, L22b, L23b, the locking portions 21b, 22b, 23b are configured to interact with the neck portion 11b, 12b, 13b of the respective associated dowel 11, 12, 13 to counteract removal of the dowel 11, 12, 13 from the locking portion 21b, 22b, 23b in a direction L' opposite the longitudinal direction L. Along this length L21b, L22b, L23b the respective dowel 11, 12, 13 is slidable in the locking portion 21b, 22b, 23b along the transverse direction T.

The length L21b, L22b, L23b of respective locking portion 21b, 22b, 23b is at least equal to, and is preferably greater than, a difference by which the dowel distance D1112, D1113 is greater than the recess distance D2122, D2123. If the dowels 11, 12, 13 are identical and the recesses 21, 22, 23 are identical, the difference by which the dowel distance D1112, D1113 is greater than the recess distance D2122, D2123 will be equal to the gap G formed between the respective secondary dowel 22, 23 and the end portion 22c, 23c of the associated secondary recess 22, 23.

As mentioned earlier, this provides sufficient length L21b, L22b, L23b allowing all the recesses 21, 22, 23 to be designed identically with the secondary recess 22, 23 to be shifted the above disclosed difference in distance such that the secondary dowel 12, 13 becomes positioned in the locking portion 22b, 23b without reaching any end portion of the secondary recess 22, 23.

As shown in the figures and as indicated in figure 2A, the primary and secondary dowels 11, 12, 13 are arranged on a common dowel centre line DCL extending along the transverse direction T and the primary and secondary recesses 21, 22, 23 are arranged on a common recess centre line RCL extending along the transverse direction T.

It may be noted that in the preferred embodiment there is, as shown in figure 1, more than one set, in the disclosed embodiment there is two sets, of recesses 21, 22, 23, 41, 42, 43 in the second furniture part 20. As shown in figure there is a unique common recess centre line RCL1, RCL2 such that the recesses of each set of recesses are positioned along their own common recess centre line RCL1, RCL2. In the preferred embodiment, there is one set of dowels 11, 12, 13 on the first furniture part 10 and one set of dowels 31, 32, 33 on the third furniture part 30. Alternatively, the first and third furniture pats 10, 30 may be a single first furniture part 10 having more than one set, in the preferred embodiment there is two sets, of dowels 11, 12, 13, 31, 32, 33 on the first furniture part 10. Each of the sets of dowels 11, 12, 13, 31, 32, 33 is associated with a unique common dowel centre line DLC1, DCL2 such that the dowels of each set of dowels are positioned along their own common centre line DCL1, DCL2.

As e.g. shown in figure 2C, each set of dowels is formed of a single primary dowel 11 and two or more secondary dowels 12, 13, and each set of recesses is formed of a single primary recess 21 and two or more secondary recesses 22, 23.

The second furniture part 20 is in the preferred embodiment a plate shaped member with the primary and secondary recesses 21, 22, 23 formed in a major surface 20a of the plate shaped member. In the preferred embodiment, the dowels 11, 12, 13 are provided on a side edge 10a of a plate shaped member 10 forming the first furniture part 10.

The primary recess 21 is, at a transition between the locking portion 21b and the end portion 21c, provided with a localised geometrical alteration 21d locally increasing force needed to move the primary dowel 11 relative to the primary recess 21 from the locking portion 21b to the end portion 21c compared to force needed to move the primary dowel 11 relative to the primary recess 21 along the locking portion 21b. The localised geometrical alteration may e.g. be a small hump or wart 21d on a part of a side wall of the primary recess 21 as indicated in the enlargement of figure 2B.

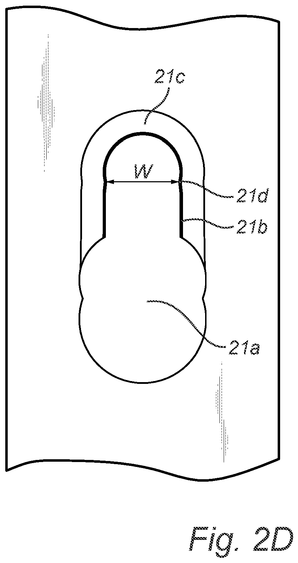

Alternatively, as indicated in figure 2D, the localised geometrical alteration may e.g. be a localised slightly smaller width W, in a direction T" transverse to the longitudinal direction L and transverse to the transverse direction T, of the primary recess 21.

The localised geometrical alteration may according to an alternative not shown be an alteration or distinct change of the sidewall geometry such that the second furniture part 20 e.g. is forced slightly harder towards the first furniture part 10 as the dowel 11 passes this localised geometrical alteration or change 21d. This may e.g. be formed by the internal ridges locally being formed at a slightly greater depth in the recess compared to the depth they are formed at in the locking portion 21b, 22b, 23b.

If the secondary recesses 22, 23 also are provided with a localised geometrical alteration, the relative distances between the recesses 21, 22, 23 and the dowels 11, 12, 13 are preferably chosen such that the secondary dowel 12, 13 does not reach the localized geometrical alteration of the secondary recess 22, 23.

The primary and secondary recesses 21, 22, 23 are in this embodiment identical but it may be noted that they do not need to be identical.

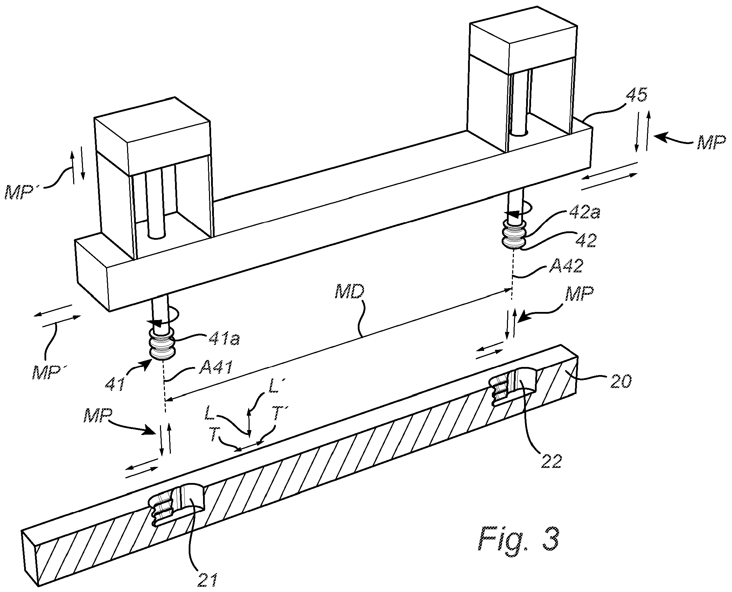

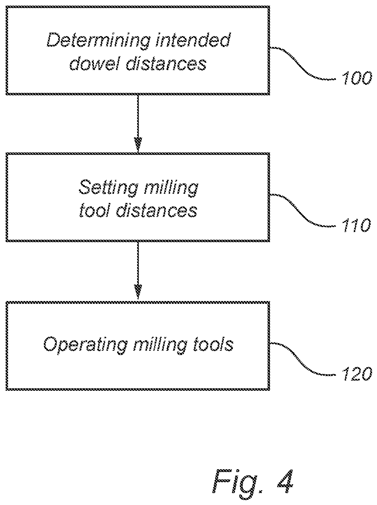

As mentioned above, there is also disclosed a method of providing a furniture part 20 with a primary recess 21 and a secondary recess 22, 23 configured to interact with a primary dowel 11 respectively a secondary dowel 12, 13 of another furniture part 10. The method comprises with reference to figures 3 and 4, determining 100 an intended distance D1112, D1113 between the primary dowel 11 and the secondary dowel 12, 13, setting 110 a distance MD between a first milling tool 41 and a second milling tool 42, the distance MD being smaller than the intended distance D1112, D1113 between the primary dowel 11 and the secondary dowel 12, 13, and simultaneously operating 120 the first and the second milling tool 41, 42 in a common milling pattern MP while maintaining the distance MD thereby forming a primary recess 21 and a secondary recess 22, 23 at a mutual distance D2122, D2123 being smaller than then intended distance D1112, D1113 between the primary dowel 11 and the secondary dowel 12, 13.

As shown in figure 3, the first and second milling tools 41, 42 fixedly attached to a common machine part 45, wherein the act of simultaneously operating the first and second milling tool 41, 42 comprises moving the common machine part 45 to provide at least a part of the common milling pattern MP. As shown in figure 3, the milling pattern MP comprises
moving the milling tools 41, 42 towards and into the second furniture part 20 in a longitudinal direction L thereby drilling and forming the insertion portions 21a, 22a, 23a or inserting the milling tools 41, 42 into pre-drilled holes and forming the insertion portions 21a, 22a, 23a,
moving the milling tools 41, 42 in the transverse direction T with an envelope surface of the respective milling tool 41, 42 forming one or both side walls of the respective locking portion 21b, 22b, 23b,
returning the milling tools 41, 42 to the respective insertion portion 21a, 22a, 23a by moving them in a direction T' opposite the transverse direction T, with the envelope surface of the respective milling tool 41, 42 forming the other of the side walls of the respective locking portion 21b, 22b, 23b in case only one of the side walls was formed in the transverse motion of the milling tools 41, 42,
removing the milling tools 41, 42 from the recesses 21, 22, 23 by moving the milling tools 41, 42 in a direction L' opposite the longitudinal direction L.

As indicated in figure 3, the milling tools 41, 42 are rotated about axes A41, A42 parallel to the longitudinal direction L and have a profiled circumferential envelope surface 41a, 42a corresponding to the desired shape of the side walls of the recesses 21, 22, 23. It is preferred that the profiled surface has diameters slightly smaller than the desired with of the recess such that one of the side walls is formed as the milling tools 41, 42 are moved along the transverse direction T and the other side wall is formed as the milling tools 41, 42 are returned to the respective insertion portion 21a, 22a, 23a. With this latter, it is possible to provide a localised geometrical alteration in the form of a slightly narrowed portion in the transition between the locking portion 21b and the end portion 21c e.g. of the kind disclosed in figure 2D.

The act of moving the milling tools 41, 42 in the transverse direction T and the act of returning the milling tools 41, 42 to the insertion portion 21a, 22a, 23a by moving them in a direction T' opposite the transverse direction T, are provided by moving the common machine part 45 first in the transverse direction T and thereafter in the direction T' opposite the transverse direction T.

The act of moving the milling tools 41, 42 towards and into the second furniture part 20 in a longitudinal direction L thereby drilling and forming the insertion portions 21a, 22a, 23a or inserting the milling tools 41, 42 into pre-drilled holes and forming the insertion portions 21a, 22a, 23a, and the act of removing the milling tools 41, 42 from the recesses 21, 22, 23 by moving the milling tools 41, 42 in a direction L' opposite the longitudinal direction L may be accomplished by moving the common machine part 45. Alternatively, it may be accomplished by moving the respective milling tool 41, 42 along the longitudinal direction L and in a direction L' opposite the longitudinal direction relative to the common machine part 45. This latter set-up is indicated by the arrows noted MP'.

It is contemplated that there are numerous modifications of the embodiments described herein, which are still within the scope as defined by the appended claims.

In the preferred embodiment, the second furniture part is connected to a first furniture part via a first connection arrangement and to a third furniture part via a second connection arrangement. It may be noted that the connection arrangement may be used in basically any kind of combinations. It is e.g. conceivable to provide a second furniture part intended to form a seat of a chair with two parallel sets of recesses intended to interact with two parallel sets of dowels arranged on each side of the chair frame forming the first furniture part 10. Thus, each of the first and second furniture parts 10, 20 may be provided with two individual connection arrangements, each connection arrangement having a set-up with a primary dowel/recess and one or more secondary dowels/recesses.

## Claims

1. Connection arrangement for connecting a first furniture part (10) to a second furniture part (20),
wherein the first furniture part (10) comprises:
a primary dowel (11) and a secondary dowel (12, 13), each dowel (11, 12, 13) extending from the first furniture part (10) along a longitudinal direction (L) towards a free end (11c, 12c, 13c) of the dowel (11, 12, 13), and each dowel (11, 12, 13) having at least one neck portion (11b, 12b, 13b), and
wherein the second furniture part (20) comprises:
a primary recess (21) and a secondary recess (22, 23), wherein the primary recess (21) is associated with the primary dowel (11) and the secondary recess (22, 23) is associated with the secondary dowel (12, 13), wherein each recess (21, 22, 23) comprises an insertion portion (21a, 22a, 23a) and a locking portion (21b, 22b, 23b) arranged one after the other along a transverse direction (T), wherein the insertion portions (21a, 22a, 23a) are configured to receive the respective associated dowel (11, 12, 13) by a motion of the first furniture part (10) along the longitudinal direction (L) relative to the second furniture part (20), and wherein the dowels (11, 12, 13) are configured to be transferred from the insertion portion (21a, 22a, 23a) to the locking portion (21b, 22b, 23b) of respective associated recess (21, 22, 23) by a motion of the first furniture part (10) along the transverse direction (T) relative to the second furniture part (20), wherein the locking portions (21b, 22b, 23b) are configured to interact with the neck portion (11b, 12b, 13b) of the respective associated dowel (11, 12, 13) to counteract removal of the dowel (11, 12, 13) from the locking portion (21b, 22b, 23b) in a direction (L') opposite the longitudinal direction (L),
wherein at least the primary recess (21) further comprises an end portion (21c) formed after the locking portion (21b) as seen along the transverse direction (T), the end portion (21c) being configured to interact with the primary dowel (11) and to prevent the first furniture part (10) from moving any further along the transverse direction (T) by providing an end position (P21) in the motion of the first furniture part (10) along the transverse direction (T) relative to the second furniture part (20), and
**characterized in that**
the dowels (11, 12, 13) and the recesses (21, 22, 23) are positioned relative to each other such that, as the first furniture part (10) has been brought to the end position (P21), the secondary dowel (12, 13) becomes positioned at a position (P22, P23) in the associated locking portion (22b, 23b) at which position (P22, P23) the secondary dowel (12, 13) would have been movable along the transverse direction (T) relative to the recess (22, 23) had the first furniture part (10) not been prevented from moving any further along the transverse direction (T).

2. Connection arrangement according to claim 1, wherein the secondary recess (22, 23) further comprises an end portion (22c, 23c),
wherein the primary dowel (11) is positioned at a dowel distance (D1112, D1113) from the secondary dowel (12, 13) along the transverse direction (T),
wherein the primary recess (21) is positioned at a recess distance (D2122, D2123) from the secondary recess (22, 23) along the transverse direction (T), and
wherein the dowel distance (D1112, D1113) is greater than the recess distance (D2122, D2123) such that as the first furniture part (10) has been brought to the end position, there is a play (G), as seen along the transverse direction (T) between the secondary dowel (22, 23) and the end portion (22c, 23c) of the secondary recess (22, 23).

3. Connection arrangement according to claim 2, wherein each locking portion (21b, 22b, 23b) has a length (L21b, L22b, L23b) along the transverse direction (T) along which length (L21b, L22b, L23b) the locking portions (21b, 22b, 23b) are configured to interact with the neck portion (11b, 12b, 13b) of the respective associated dowel (11, 12, 13) to counteract removal of the dowel (11, 12, 13) from the locking portion (21b, 22b, 23b) in a direction (L') opposite the longitudinal direction (L) and along which length (L21b, L22b, L23b) the respective dowel (11, 12, 13) is slidable in the locking portion (21b, 22b, 23b) along the transverse direction (T).

4. Connection arrangement according to claim 3, wherein the length (L21b, L22b, L23b) of respective locking portion (21b, 22b, 23b) is at least equal to, preferably greater than, a difference by which the dowel distance (D1112, D1113) is greater than the recess distance (D2122, D2123).

5. Connection arrangement according to any one of claims 1-4, wherein the primary and secondary dowels (11, 12, 13) are arranged on a common dowel centre line (DCL) extending along the transverse direction (T) and the primary and secondary recesses (21, 22, 23) are arranged on a common recess centre line (RCL) extending along the transverse direction (T).

6. Connection arrangement according to any one of claims 1-5, wherein the primary recess (21) is, at a transition between the locking portion (21b) and the end portion (21c), provided with a localised geometrical alteration (21d) locally increasing force needed to move the primary dowel (11) relative to the primary recess (21) from the locking portion (21b) to the end portion (21c) compared to force needed to move the primary dowel (11) relative to the primary recess (21) along the locking portion (21b).

7. Connection arrangement according to any one of claims 1-6, wherein the first furniture part (10) is provided with a single primary dowel (11) and two or more secondary dowels (12, 13), and the second furniture part (20) is provided with a single primary recess (21) and two or more secondary recesses (22, 23).

8. Connection arrangement according to any one of claims 1-7, wherein the second furniture part (20) is a plate shaped member with the primary and secondary recesses (21, 22, 23) formed in a major surface (20a) of the plate shaped member.

9. Connection arrangement according to any one of claims 1-8, wherein the primary and secondary recesses (21, 22, 23) are identical.

10. Method of providing a furniture part (20) with a primary recess (21) and a secondary recess (22, 23) configured to interact with a primary dowel (11) and a secondary dowel (12, 13) of another furniture part (10), the method comprising
determining an intended distance (D1112, D1113) between the primary dowel (11) and the secondary dowel (12, 13),
setting a distance (MD) between a first milling tool (41) and a second milling tool (42), the distance (MD) being smaller than the intended distance (D1112, D1113) between the primary dowel (11) and the secondary dowel (12, 13),
simultaneously operating the first and the second milling tool (41, 42) in a common milling pattern (MP) while maintaining the distance (MD) thereby forming a primary recess (21) and a secondary recess (22, 23) at a mutual distance (D2122, D2123) being smaller than then intended distance (D1112, D1113) between the primary dowel (11) and the secondary dowel (12, 13).

11. Method according to claim 10, wherein the first and second milling tools (41, 42) are fixedly attached to a common machine part (45), wherein the act of simultaneously operating the first and second milling tool (41, 42) comprises moving the common machine part (45) to provide at least a part of the common milling pattern (MP).

12. Method according to claim 10 or 11, wherein each recess (21, 22, 23) comprises an insertion portion (21a, 22a, 23a) and a locking portion (21b, 22b, 23b) arranged one after the other along a transverse direction (T), wherein the act of simultaneously operating the first and the second milling tool (41, 42) in a common milling pattern (MP) comprises
moving the milling tools (41, 42) towards and into the second furniture part (20) in a longitudinal direction (L) thereby drilling and forming the insertion portions (21a, 22a, 23a) or inserting the milling tools (41, 42) into pre-drilled holes and forming the insertion portions (21a, 22a, 23a),
moving the milling tools (41, 42) in the transverse direction (T) with an envelope surface of the respective milling tool (41, 42) forming one or both side walls of the respective locking portion (21b, 22b, 23b),
returning the milling tools (41, 42) to the respective insertion portion (21a, 22a, 23a) by moving them in a direction (T') opposite the transverse direction (T), with the envelope surface of the respective milling tool (41, 42) forming the other of the side walls of the respective locking portion (21b, 22b, 23b) in case only one of the side walls was formed in the transverse motion of the milling tools (41, 42),
removing the milling tools (41, 42) from the recesses (21, 22, 23) by moving the milling tools (41, 42) in a direction (L') opposite the longitudinal direction (L).

13. Method according to claim 11 and 12, wherein at least the act of moving the milling tools (41, 42) in the transverse direction (T) and the act of returning the milling tools (41, 42) to the insertion portion (21a, 22a, 23a) by moving them in a direction (T') opposite the transverse direction (T), are provided by moving the common machine part (45) first in the transverse direction (T) and thereafter in the direction (T') opposite the transverse direction (T).

## Patentansprüche

1. Verbindungsanordnung zum Verbinden eines ersten Möbelteils (10) mit einem zweiten Möbelteil (20), wobei das erste Möbelteil (10) umfasst:
einen primären Dübel (11) und einen sekundären Dübel (12, 13), wobei jeder Dübel (11, 12, 13) sich von dem ersten Möbelteil (10) entlang einer Längsrichtung (L) zu einem freien Ende (11c, 12c, 13c) des Dübels (11, 12, 13) erstreckt, und jeder Dübel (11, 12, 13) mindestens einen Halsabschnitt (11b, 12b, 13b) aufweist, und wobei das zweite Möbelteil (20) umfasst:
eine primäre Ausnehmung (21) und eine sekundäre Ausnehmung (22, 23), wobei die primäre Ausnehmung (21) dem primären Dübel (11) zugeordnet ist und die sekundäre Ausnehmung (22, 23) dem sekundären Dübel (12, 13) zugeordnet ist, wobei jede Ausnehmung (21, 22, 23) einen Einführabschnitt (21a, 22a, 23a) und einen Verriegelungsabschnitt (21b, 22b, 23b) umfasst, die entlang einer Querrichtung (T) hintereinander angeordnet sind, wobei die Einführabschnitte (21a, 22a, 23a) konfiguriert sind, um den jeweiligen zugehörigen Dübel (11, 12, 13) durch eine Bewegung des ersten Möbelteils (10) entlang der Längsrichtung (L) relativ zu dem zweiten Möbelteil (20) aufzunehmen, und wobei die Dübel (11, 12, 13) so konfiguriert sind, dass sie von dem Einführabschnitt (21a, 22a, 23a) zu dem Verriegelungsabschnitt (21b, 22b, 23b) der jeweiligen zugeordneten Ausnehmung (21, 22, 23) durch eine Bewegung des ersten Möbelteils (20) entlang der Querrichtung (T) relativ zu dem zweiten Möbelteil (20) verlagert werden, wobei die Verriegelungsabschnitte (21b, 22b, 23b) so konfiguriert sind, dass sie mit dem Halsabschnitt (11 b, 12b, 13b) des jeweiligen zugeordneten Dübels (11, 12, 13) zusammenzuwirken, um einem Entfernen des Dübels (11, 12, 13) aus dem Verriegelungsabschnitt (21b, 22b, 23b) in einer Richtung (L') entgegengesetzt zur Längsrichtung (L) entgegenzuwirken,
wobei zumindest die primäre Ausnehmung (21) ferner einen Endabschnitt (21c) aufweist, der entlang der Querrichtung (T) gesehen hinter dem Verriegelungsabschnitt (21b) ausgebildet ist, wobei der Endabschnitt (21c) zum Zusammenwirken mit dem primären Dübel (11) konfiguriert ist, und um das erste Möbelteil (10) daran zu hindern, sich weiter entlang der Querrichtung (T) zu bewegen, indem er eine Endposition (P21) bei der Bewegung des ersten Möbelteils (10) entlang der Querrichtung (T) relativ zu dem zweiten Möbelteil (20) bereitstellt, und
**dadurch gekennzeichnet, dass** die Dübel (11, 12, 13) und die Ausnehmungen (21, 22, 23) so relativ zu einander positioniert sind, dass, wenn das erste Möbelteil (10) in die Endposition (P21) gebracht wurde, der sekundäre Dübel (12, 13) in einer Position (P22, P23) in dem zugeordneten Verriegelungsabschnitt (22b, 23b) positioniert ist, in welche Position (P22, P23) der sekundäre Dübel (12, 13) entlang der Querrichtung (T) relativ zu der Ausnehmung (22, 23) beweglich gewesen wäre, wenn das erste Möbelteil (10) nicht an einer Bewegung weiter entlang der Querrichtung (T) gehindert worden wäre.

2. Verbindungsanordnung nach Anspruch 1, wobei die sekundäre Ausnehmung (22, 23) ferner einen Endabschnitt (22c, 23c) aufweist,
wobei der primäre Dübel (11) in einem Dübelabstand (D1112, D1113) von dem sekundären Dübel (12, 13) entlang der Querrichtung (T) positioniert ist,
wobei die primäre Ausnehmung (21) in einem Ausnehmungsabstand (D2122, D2123) von der sekundären Ausnehmung (22, 23) entlang der Querrichtung (T) positioniert ist, und
wobei der Dübelabstand (D1112, D1113) größer ist als der Ausnehmungsabstand (D2122, 2123), so dass, wenn das erste Möbelteil (10) in die Endposition gebracht worden ist, ein Spiel (G), gesehen entlang der Querrichtung (T), zwischen dem sekundären Dübel (22, 23) und dem Endabschnitt (22c, 23c) der sekundären Aussparung (22, 23) vorhanden ist.

3. Verbindungsanordnung nach Anspruch 2, wobei jeder Verriegelungsabschnitt (21b, 22b, 23b) eine Länge (L21b, L22b, L23b) entlang der Querrichtung (T) aufweist, wobei entlang dieser Länge (L21b, L22b, L23b) die Verriegelungsabschnitte (21b, 22b, 23b) so konfiguriert sind, dass sie mit dem Halsabschnitt (11b, 12b, 13b) des jeweiligen zugeordneten Dübels (11, 12, 13) zusammenzuwirken, um einer Entfernung des Dübel (11, 12, 13) aus dem Verriegelungsabschnitt (21b, 22b, 23b) in einer Richtung (L') entgegengesetzt zur Längsrichtung (L) entgegenzuwirken, und entlang welcher Länge (L21b, L22b, L23b) der jeweilige Dübel (11, 12, 13) in dem Verriegelungsabschnitt (21b, 22b, 23b) entlang der Querrichtung (T) verschiebbar ist.

4. Verbindungsanordnung nach Anspruch 3, wobei die Länge (L21b, L22b, L23b) des jeweiligen Verriegelungsabschnitts (21b, 22b, 23b) mindestens gleich, vorzugsweise größer ist als eine Differenz, um die der Dübelabstand (D1112, D1113) größer ist als der Ausnehmungsabstand (D2122, D2123).

5. Verbindungsanordnung nach einem der Ansprüche 1-4, wobei die primären und sekundären Dübel (11, 12, 13) auf einer gemeinsamen, in Querrichtung (T) verlaufenden Dübelmittellinie (DCL) angeordnet sind und die primären und sekundären Ausnehmungen (21, 22, 23) auf einer gemeinsamen Ausnehmungsmittellinie (RCL) angeordnet sind, die sich entlang der Querrichtung (T) erstreckt

6. Verbindungsanordnung nach einem der Ansprüche 1-5, wobei die primäre Ausnehmung (21) an einem Übergang zwischen dem Verriegelungsabschnitt (21b) und dem Endabschnitt (21c) mit einer lokalisierten geometrischen Veränderung (21d) versehen ist, die lokal die Kraft erhöht, die erforderlich ist, um den primären Dübel (11) relativ zu der primären Ausnehmung (21) von dem Verriegelungsabschnitt (21b) zu dem Endabschnitt (21c) zu bewegen, im Vergleich zur Kraft, die erforderlich ist, um den primären Dübel (11) relativ zu der primären Ausnehmung (21) entlang des Verriegelungsabschnitts (21b) zu bewegen.

7. Verbindungsanordnung nach einem der Ansprüche 1 bis 6, wobei das erste Möbelteil (10) mit einem einzigen primären Dübel (11) und zwei oder mehr sekundären Dübeln (12, 13) versehen ist und das zweite Möbelteil (20) mit einer einzigen primären Ausnehmung (21) und zwei oder mehr sekundären Ausnehmungen (22, 23) versehen ist.

8. Verbindungsanordnung nach einem der Ansprüche 1-7, wobei das zweite Möbelteil (20) ein plattenförmiges Element ist, wobei die
primären und sekundären Ausnehmungen (21, 22, 23) in einer Hauptfläche (20a) des plattenförmigen Elements ausgebildet sind.

9. Verbindungsanordnung nach einem der Ansprüche 1-8, wobei die primären und sekundären Ausnehmungen (21, 22, 23) identisch sind.

10. Verfahren zur Bereitstellung eines Möbelteils (20) mit einer primären Ausnehmung (21) und einer sekundären Ausnehmung (22, 23), die so gestaltet sind, dass sie mit einem primären Dübel (11) und einem sekundären Dübel (12, 13) eines anderen Möbelteils (10) zusammenwirken, wobei das Verfahren umfasst
Bestimmen eines vorgesehenen Abstands (D1112, D1113) zwischen dem primären Dübel (11) und dem sekundärenDübel (12, 13),
Einstellen eines Abstands (MD) zwischen einem ersten Fräswerkzeug (41) und einem zweiten Fräswerkzeug (42), wobei der Abstand (MD) kleiner ist als der vorgesehene Abstand (D1112, D1113) zwischen dem primärenDübel (11) und dem sekundären Dübel (12, 13),
wobei gleichzeitig das erste und das zweite Fräswerkzeug (41, 42) in einem gemeinsamen Fräsmuster (MP) betrieben werden, während der Abstand (MD) beibehalten wird, wodurch eine primäre Ausnehmung (21) und eine sekundäre Ausnehmung (22, 23) in einem gegenseitigen Abstand (D2122, D2123), der kleiner ist als der dann vorgesehene Abstand (D1112, D1113) zwischen dem primären Dübel (11) und dem sekundären Dübel (12, 13), gebildet werden.

11. Verfahren nach Anspruch 10, wobei das erste und das zweite Fräswerkzeug (41, 42) fest an einem gemeinsamen Maschinenteil (45) angebracht sind, wobei der Vorgang des gleichzeitigen Betreibens des ersten und des zweiten Fräswerkzeugs (41, 42) das Bewegen des gemeinsamen Maschinenteils (45) umfasst, um zumindest einen Teil des gemeinsamen Fräsmusters (MP) zu erzeugen.

12. Verfahren nach Anspruch 10 oder 11, wobei jede Ausnehmung (21, 22, 23) einen Einführabschnitt (21a, 22a, 23a) und einen Verriegelungsabschnitt (21b, 22b, 23b) aufweist, die entlang einer Querrichtung (T) hintereinander angeordnet sind, wobei der Vorgang des gleichzeitigen Betreibens des ersten und des zweiten Fräswerkzeugs (41, 42) in einem gemeinsamen Fräsmuster (MP) umfasst:
Bewegen der Fräswerkzeuge (41, 42) zu dem und in das zweite Möbelteil (20) in einer Längsrichtung (L), wodurch die Einführabschnitte (21a, 22) gebohrt und geformt werden, oder Einführen der Fräswerkzeuge (41, 42) in vorgebohrte Löcher und Ausbilden der Einführabschnitte (21a, 22a, 23a),
Bewegen der Fräswerkzeuge (41, 42) in der Querrichtung (T), wobei eine Mantelfläche des jeweiligen Fräswerkzeugs (41, 42) eine oder beide Seitenwände des jeweiligen Verriegelungsabschnitts (21b, 22b, 23b) bildet,
Rückführen der Fräswerkzeuge (41, 42) in den jeweiligen Einführabschnitt (21a, 22a, 23a), indem sie in einer Richtung (T') entgegengesetzt zu der Querrichtung (T) bewegt werden, wobei die Mantelfläche des jeweiligen Fräswerkzeugs (41,42) die andere der Seitenwände des jeweiligen Verriegelungsabschnitts (21b, 22b, 23b) bildet, falls bei der Querbewegung der Fräswerkzeuge (41,42) nur eine der Seitenwände gebildet wurde,
Entfernen der Fräswerkzeuge (41, 42) aus den Ausnehmungen (21, 22, 23) durch Bewegen der Fräswerkzeuge (41, 42) in einer Richtung (L') entgegen der Längsrichtung (L).

13. Verfahren nach Anspruch 11 und 12, wobei zumindest der Vorgang des Bewegens der Fräswerkzeuge (41, 42) in der Querrichtung (T) und der Vorgang des Rückführens der Fräswerkzeuge (41, 42) in den Einführabschnitt (21a, 22a, 23a) durch deren Bewegung in einer der Querrichtung (T) entgegengesetzten Richtung (T') dadurch erfolgt, daß das gemeinsame Maschinenteil (45) zunächst in der Querrichtung (T) und danach in die der Querrichtung (T) entgegengesetzte Richtung (T') bewegt wird.

## Revendications

1. Agencement d'assemblage pour assembler une première partie de meuble (10) à une seconde partie de meuble (20),
dans lequel la première partie de meuble (10) comprend :
un goujon primaire (11) et un goujon secondaire (12, 13), chaque goujon (11, 12, 13) s'étendant de la première partie de meuble (10) dans un sens longitudinal (L) en direction d'une extrémité libre (11c, 12c, 13c) du goujon (11, 12, 13), et chaque goujon (11, 12, 13) comportant au moins une partie collet (11b, 12b, 13b), et
dans lequel la seconde partie de meuble (20) comprend :
un évidement primaire (21) et un évidement secondaire (22, 23), dans lequel l'évidement primaire (21) est associé au goujon primaire (11) et l'évidement secondaire (22, 23) est associé au goujon secondaire (12, 13), dans lequel chaque évidement (21, 22, 23) comprend une partie d'introduction (21a, 22a, 23a) et une partie de verrouillage (21b, 22b, 23b) disposées l'une après l'autre dans un sens transversal (T), dans lequel les parties d'introduction (21a, 22a, 23a) sont conçues pour recevoir le goujon associé respectif (11, 12, 13) par un déplacement de la première partie de meuble (10) dans le sens longitudinal (L) par rapport à la seconde partie de meuble (20), et dans lequel les goujons (11, 12, 13) sont conçus pour être transférés de la partie d'introduction (21a, 22a, 23a) à la partie de verrouillage (21b, 22b, 23b) de l'évidement associé respectif (21, 22, 23) par un déplacement de la première partie de meuble (10) dans le sens transversal (T) par rapport à la seconde partie de meuble (20), dans lequel les parties de verrouillage (21b, 22b, 23b) sont conçues pour interagir avec la partie collet (11b, 12b, 13b) du goujon associé respectif (11, 12, 13) pour contrecarrer un retrait du goujon (11, 12, 13) de la partie de verrouillage (21b, 22b, 23b) dans un sens (L') contraire au sens longitudinal (L),
dans lequel au moins l'évidement primaire (21) comprend en outre une partie d'extrémité (21c) formée après la partie de verrouillage (21b) lorsqu'observée dans le sens transversal (T), la partie d'extrémité (21c) étant conçue pour interagir avec le goujon primaire (11) et pour empêcher un déplacement plus avant dans le sens transversal (T) de la première partie de meuble (10) par la prévision d'une position de fin de course (P21) du déplacement de la première partie de meuble (10) dans le sens transversal (T) par rapport à la seconde partie de meuble (20), et
**caractérisé en ce que** les goujons (11, 12, 13) et les évidements (21, 22, 23) sont positionnés les uns par rapport aux autres de sorte que, lorsque la première partie de meuble (10) a été amenée à la position de fin de course (P21), le goujon secondaire (12, 13) se positionne à une position (P22, P23) dans la partie de verrouillage associée (22b, 23b), à laquelle position (P22, P23) le goujon secondaire (12, 13) aurait pu être déplacé dans le sens transversal (T) par rapport à l'évidement (22, 23) si un déplacement plus avant dans le sens transversal (T) de la première partie de meuble (10) n'avait pas été empêché.

2. Agencement d'assemblage selon la revendication 1, dans lequel l'évidement secondaire (22, 23) comprend en outre une partie d'extrémité (22c, 23c),
dans lequel le goujon primaire (11) est positionné à une distance de goujon (D1112, D1113) du goujon secondaire (12, 13) dans le sens transversal (T),
dans lequel l'évidement primaire (21) est positionné à une distance d'évidement (D2122, D2123) de l'évidement secondaire (22, 23) dans le sens transversal (T), et
dans lequel la distance de goujon (D1112, D1113) est supérieure à la distance d'évidement (D2122, D2123) de sorte que, lorsque la première partie de meuble (10) a été amenée à la position de fin de course, un jeu (G) est présent, lorsqu'observé dans le sens transversal (T), entre le goujon secondaire (22, 23) et la partie d'extrémité (22c, 23c) de l'évidement secondaire (22, 23).

3. Agencement d'assemblage selon la revendication 2, dans lequel chaque partie de verrouillage (21b, 22b, 23b) a une longueur (L21b, L22b, L23b) dans le sens transversal (T), le long de laquelle longueur (L21b, L22b, L23b) les parties de verrouillage (21b, 22b, 23b) sont conçues pour interagir avec la partie collet (11b, 12b, 13b) du goujon associé respectif (11, 12, 13) pour contrecarrer un retrait du goujon (11, 12, 13) de la partie de verrouillage (21b, 22b, 23b) dans un sens (L') contraire au sens longitudinal (L) et le long de laquelle longueur (L21b, L22b, L23b) le goujon respectif (11, 12, 13) peut coulisser dans la partie de verrouillage (21b, 22b, 23b) dans le sens transversal (T) .

4. Agencement d'assemblage selon la revendication 3, dans lequel la longueur (L21b, L22b, L23b) de la partie de verrouillage respective (21b, 22b, 23b) est au moins égale, de préférence supérieure, à une différence selon laquelle la distance de goujon (D1112, D1113) est supérieure à la distance d'évidement (D2122, D2123).

5. Agencement d'assemblage selon l'une quelconque des revendications 1 à 4, dans lequel les goujons primaire et secondaires (11, 12, 13) sont disposés sur une ligne centrale de goujon commune (DCL) s'étendant dans le sens transversal (T) et les évidements primaire et secondaires (21, 22, 23) sont disposés sur une ligne centrale d'évidement commune (RCL) s'étendant dans le sens transversal (T).

6. Agencement d'assemblage selon l'une quelconque des revendications 1 à 5, dans lequel l'évidement primaire (21) est, au niveau d'une transition entre la partie de verrouillage (21b) et la partie d'extrémité (21c), pourvu d'une modification géométrique localisée (21d) augmentant localement une force nécessaire pour déplacer le goujon primaire (11) par rapport à l'évidement primaire (21) de la partie de verrouillage (21b) à la partie d'extrémité (21c) par comparaison à une force nécessaire pour déplacer le goujon primaire (11) par rapport à l'évidement primaire (21) le long de la partie de verrouillage (21b).

7. Agencement d'assemblage selon l'une quelconque des revendications 1 à 6, dans lequel la première partie de meuble (10) est pourvue d'un unique goujon primaire (11) et d'au moins deux goujons secondaires (12, 13), et la seconde partie de meuble (20) est pourvue d'un unique évidement primaire (21) et d'au moins deux évidements secondaires (22, 23).

8. Agencement d'assemblage selon l'une quelconque des revendications 1 à 7, dans lequel la seconde partie de meuble (20) est un élément en forme de plaque, les évidements primaire et secondaires (21, 22, 23) étant formés dans une surface principale (20a) de l'élément en forme de plaque.

9. Agencement d'assemblage selon l'une quelconque des revendications 1 à 8, dans lequel les évidements primaire et secondaires (21, 22, 23) sont identiques.

10. Procédé permettant de doter une partie de meuble (20) d'un évidement primaire (21) et d'un évidement secondaire (22, 23) conçus pour interagir avec un goujon primaire (11) et un goujon secondaire (12, 13) d'une autre partie de meuble (10), le procédé comprenant les étapes consistant à
déterminer une distance souhaitée (D1112, D1113) entre le goujon primaire (11) et le goujon secondaire (12, 13),
fixer une distance (MD) entre un premier outil de fraisage (41) et un second outil de fraisage (42), la distance (MD) étant inférieure à la distance souhaitée (D1112, D1113) entre le goujon primaire (11) et le goujon secondaire (12, 13),
mettre en oeuvre simultanément les premier et second outils de fraisage (41, 42) selon un modèle de fraisage commun (MP) tout en maintenant la distance (MD), formant ainsi un évidement primaire (21) et un évidement secondaire (22, 23) à une distance mutuelle (D2122, D2123) qui est inférieure à la distance souhaitée (D1112, D1113) entre le goujon primaire (11) et le goujon secondaire (12, 13).

11. Procédé selon la revendication 10, dans lequel les premier et second outils de fraisage (41, 42) sont fixés à demeure à une partie de machine commune (45), dans lequel l'action de mise en oeuvre simultanée des premier et second outils de fraisage (41, 42) consiste à déplacer la partie de machine commune (45) pour obtenir au moins une partie du modèle de fraisage commun (MP).

12. Procédé selon la revendication 10 ou la revendication 11, dans lequel chaque évidement (21, 22, 23) comprend une partie d'introduction (21a, 22a, 23a) et une partie de verrouillage (21b, 22b, 23b) disposées l'une après l'autre dans un sens transversal (T), dans lequel l'action de mise en oeuvre simultanée des premier et second outils de fraisage (41, 42) selon un modèle de fraisage commun (MP) consiste à
déplacer des outils de fraisage (41, 42) vers et dans la seconde partie de meuble (20) dans un sens longitudinal (L), forant et formant ainsi les parties d'introduction (21a, 22a, 23a) ou insérer les outils de fraisage (41, 42) dans des trous forés au préalable et former les parties d'introduction (21a, 22a, 23a),
déplacer les outils de fraisage (41, 42) dans le sens transversal (T), une surface d'enveloppe de l'outil de fraisage respectif (41, 42) formant une paroi latérale ou les deux parois latérales de la partie de verrouillage respective (21b, 22b, 23b),
ramener les outils de fraisage (41, 42) vers la partie d'introduction respective (21a, 22a, 23a) en les déplaçant dans un sens (T') contraire au sens transversal (T), la surface d'enveloppe de l'outil de fraisage respectif (41, 42) formant l'autre des parois latérales de la partie de verrouillage respective (21b, 22b, 23b) dans un cas dans lequel seule l'une des parois latérales a été formée lors du déplacement transversal des outils de fraisage (41, 42),
retirer les outils de fraisage (41, 42) des évidements (21, 22, 23) par un déplacement des outils de fraisage (41, 42) dans un sens (L') contraire au sens longitudinal (L).

13. Procédé selon la revendication 11 et la revendication 12, dans lequel au moins l'action de déplacement des outils de fraisage (41, 42) dans le sens transversal (T) et l'action de retour des outils de fraisage (41, 42) vers la partie d'introduction (21a, 22a, 23a) en les déplaçant dans un sens (T') contraire au sens transversal (T), sont obtenues par un déplacement de la partie de machine commune (45) d'abord dans le sens transversal (T) et ensuite dans le sens (T') contraire au sens transversal (T).
